# EUROPEAN PATENT APPLICATION

(11) **EP 3 677 121 A1**
(43) Date of publication of application: **08.07.2020**
(21) Application number: 18851712.2
(22) Date of filing: 02.08.2018
(51) Int. Cl.: A23D 7/00, A23C 9/152, A23D 7/02

(54) **FAT OR OIL COMPOSITION CONTAINING UNSATURATED FATTY ACID**

(30) Priority: 01.09.2017 JP 2017168917
(71) Applicant: Fuji Oil Holdings Inc., Izumisano-shi, Osaka 598-8540 (JP)
(72) Inventor: MORIKAWA, Miwako, Izumisano-shi Osaka 598-8540 (JP); KATO, Masaharu, Izumisano-shi Osaka 598-8540 (JP)
(74) Representative: Becker, Eberhard
(86) International application number: PCT/JP2018/028957
(87) International publication number: WO 2019/044351

(57) **Abstract**

The present invention addresses the problem of providing a fat or oil composition which comprises an unsaturated fatty acid-containing fat or oil and yet enables the preparation of a nursery formulated milk with an excellent taste. The present invention has been completed based on the finding that oxidation of an unsaturated fatty acid is inhibited in a fat or oil composition wherein an aqueous phase, said aqueous phase containing one or more member selected from ascorbic acid and a salt thereof dissolved therein, having a pH value controlled to 3.6 or more and having a preset solid content, is dispersed in an oily phase, said oily phase comprising a fat or oil containing the unsaturated fatty acid and lecithin.

## Description

### BACKGROUND OF THE INVENTION

### Technical Field

The present invention relates to an oil and fat composition containing unsaturated fatty acid capable of being used in nursery formulated milk.

### Related Art

Unsaturated fatty acid, particularly eicosapentaenoic acid (EPA) or docosahexaenoic acid (DHA), may be formulated in a nursery formulated milk as nutrients necessary for infants.

Unsaturated fatty acids contain double bonds that are oxidized with time and may have a strange taste. This phenomenon is apt to happen for EPA and DHA that have multiple double bonds.

There is patent literature 1 as an application relating to oil and fat used in a nursery formulated milk. Here, patent literature 1 discloses a manufacturing method of molecularly distilling fish oil at a predetermined temperature in order to simultaneously improve DHA and cholesterol.

Patent literature 2 is an application entitled "Highly Unsaturated Fatty Acid-Containing Oil and fat Powder Excellent in Oxidation Stability and Method of Producing the Same" and discloses that "it is possible to obtain highly unsaturated fatty acid-containing oil and fat powder excellent in oxidation stability by formulating highly unsaturated fatty acid-containing oil and fat in combination of two types of lecithin, i.e., lecithin having a phosphatidylcholine content of 55% or more and enzymatically decomposed lecithin in a specified ratio, adding a specified amount of soybean peptide having a chain length of 3 to 6, emulsifying the mixture to form fine particles, adding a base agent, and drying the resultant by a spray drying method to form powder".

### Literature of related art

### Patent literature

Patent Literature 1: Japanese Patent Laid-open No. H09-296198
Patent Literature 2: Japanese Patent Laid-open No. 2006-298969

### SUMMARY

### Problems to be solved

An object of the present invention is to provide an oil and fat composition that contains unsaturated fatty acid and can also prepare nursery formulated milk having a satisfactory taste.

### Means to Solve Problems

The inventor of the present invention has conducted intensive research to achieve the above object. Patent literature 1 discloses that the taste of the oil and fat does not change or deteriorate owing to molecular distillation at a predetermined temperature, but does not specifically disclose the way to suppress subsequent oxidation after the distillation.
Patent literature 2 has a great restriction on the composition, for example, the weight ratio of the predetermined lecithin to the oil and fat containing highly unsaturated fatty acid needs to be 100% to 300%.

The inventor of the present invention have further conducted intensive research and find the following result to complete the present invention, that is, in an oil and fat composition in which an aqueous phase is dispersed in an oil phase containing unsaturated fatty acid-containing oil and fat and lecithins, oxidation of unsaturated fatty acid is suppressed, wherein the aqueous phase has one or more selected from ascorbic acid and salts thereof dissolved therein, has pH adjusted to 3.6 or more, and has a predetermined solid content.

That is, the present invention relates to:
(1) an oil and fat composition satisfying the following conditions:
   1: 0.3 to 22 mass% of an aqueous phase, in which one or more selected from ascorbic acid and salts thereof are dissolved and pH is adjusted to 3.6 or more, is dispersed in an oil phase;
   2: an amount of a solid content in the aqueous phase is 22.80 to 85 mass%; and
   3: the oil phase contains an oil and fat including unsaturated fatty acid and lecithins.
(2) the oil and fat composition according to (1), in which the aqueous phase includes the one or more selected from ascorbic acid and salts thereof as essential components and additionally includes a pH adjuster dissolved therein.
(3) the oil and fat composition according to (1), in which in the lecithins, a value obtained by dividing an amount of phosphatidylcholine in the lecithins by the sum of the amount of phosphatidylcholine, an amount of phosphatidylethanolamine, and an amount of phosphatidylinositol is less than 0.48.
(4) the oil and fat composition according to (2), in which in the lecithins, a value obtained by dividing an amount of phosphatidylcholine in the lecithins by the sum of the amount of phosphatidylcholine, an amount of phosphatidylethanolamine, and an amount of phosphatidylinositol is less than 0.48.
(5) the oil and fat composition according to (1), in which a sum of DHA and EPA is 0.25 mass% or more.
(6) the oil and fat composition according to (2), in which a sum of DHA and EPA is 0.25 mass% or more.
(7) the oil and fat composition according to (3), in which a sum of DHA and EPA is 0.25 mass% or more.
(8) the oil and fat composition according to (4), in which a sum of DHA and EPA is 0.25 mass% or more.
(9) a method of manufacturing an oil and fat composition by the following steps:
   1: a step of adjusting pH to 3.6 or more and dissolving one or more selected from ascorbic acid and salts thereof to prepare an aqueous phase;
   2: a step of dissolving lecithins in an oil and fat to prepare an oil phase;
   3: a step of finely dispersing the aqueous phase obtained in 1 in the oil phase obtained in 2, to obtain a water-in-oil type emulsion; and
   4: a step of mixing the water-in-oil type emulsion obtained in 3 with an oil and fat containing unsaturated fatty acid to form an oil and fat composition containing 0.3 to 22 mass% of the aqueous phase.
(10) the manufacturing method according to (9), in which the aqueous phase includes the one or more selected from ascorbic acid and salts thereof as essential components and additionally dissolves a pH adjuster.
(11) the manufacturing method according to (9), in which in the lecithins, a value obtained by dividing an amount of phosphatidylcholine in the lecithins by the sum of the amount of phosphatidylcholine, an amount of phosphatidylethanolamine, and an amount of phosphatidylinositol is less than 0.48.
(12) the manufacturing method according to (10), in which in the lecithins, a value obtained by dividing an amount of phosphatidylcholine in the lecithins by the sum of the amount of phosphatidylcholine, an amount of phosphatidylethanolamine, and an amount of phosphatidylinositol is less than 0.48.
(13) the manufacturing method according to any one of (9) to (12), in which a sum of DHA and EPA is 0.25 mass% or more.
(14) the oil and fat composition according to any one of (1) to (8), which is used for nursery formulated milk.
(15) a nursery formulated milk including the oil and fat composition according to any one of (1) to (8).

In other words,
(21) an oil and fat composition satisfying the following conditions:
   1: 0.3 to 22 mass% of an aqueous phase, in which one or more selected from ascorbic acid and salts thereof are dissolved and pH is adjusted to 3.6 or more, is present in a state of being dispersed in an oil phase;
   2: an amount of a solid content in the aqueous phase is 22.80 to 85 mass%; and
   3: the oil phase contains an oil and fat including unsaturated fatty acid and lecithins.
(22) the oil and fat composition according to (21), in which the aqueous phase includes the one or more selected from ascorbic acid and salts thereof as essential components and additionally includes a pH adjuster dissolved therein.
(23) the oil and fat composition according to (21) or (22), in which in the lecithins, a value obtained by dividing an amount of phosphatidylcholine in the lecithins by the sum of the amount of phosphatidylcholine, an amount of phosphatidylethanolamine, and an amount of phosphatidylinositol is less than 0.48.
(24) the oil and fat composition according to any one of (21) to (23), in which a sum of DHA and EPA is 0.25 mass% or more.
(25) a method of manufacturing an oil and fat composition by the following steps:
   1: a step of adjusting pH to 3.6 or more and dissolving one or more selected from ascorbic acid and salts thereof to prepare an aqueous phase;
   2: a step of dissolving lecithins in an oil and fat to prepare an oil phase;
   3: a step of finely dispersing the aqueous phase obtained in 1 in the oil phase obtained in 2, to obtain a water-in-oil type emulsion; and
   4: a step of mixing the water-in-oil type emulsion obtained in 3 with an oil and fat containing unsaturated fatty acid to form an oil and fat composition containing 0.3 to 22 mass% of the aqueous phase.
(26) the manufacturing method according to (25), in which the aqueous phase includes the one or more selected from ascorbic acid and salts thereof as essential components and additionally dissolves a pH adjuster.
(27) the manufacturing method according to (25) or (26), in which in the lecithins, a value obtained by dividing an amount of phosphatidylcholine in the lecithins by the sum of the amount of phosphatidylcholine, an amount of phosphatidylethanolamine, and an amount of phosphatidylinositol is less than 0.48.
(28) the manufacturing method according to any one of (25) to (27), in which a sum of DHA and EPA is 0.25 mass% or more.
(29) the oil and fat composition according to any one of (21) to (24), which is used for nursery formulated milk.
(30) a nursery formulated milk including the oil and fat composition according to any one of (21) to (24).

### Effect

According to the present invention, it is possible to provide an oil and fat composition that contains unsaturated fatty acid and can prepare nursery formulated milk having a satisfactory taste.

### DESCRIPTION OF THE EMBODIMENTS

An oil and fat composition according to the present invention includes an oil phase that is made of oil and fat and components dissolved in oil and fat and acts as a continuous phase, and an aqueous phase that is made of water and components dissolved in water and is dispersed in the oil phase.

Moreover, in the preparation of the oil and fat composition according to the present invention, after an aqueous phase is temporarily dispersed in a predetermined oil phase (also referred to as an "oil phase 1" in the present invention) to form an emulsion, the emulsion may be dispersed in oil and fat (also referred to as an "oil phase 2" in the present invention), and a final oil and fat composition is obtained. The "final oil and fat composition" is the oil and fat composition of the present invention, but the oil phase in the present product is a mixture of the oil phase 1 and the oil phase 2, and this oil phase may be referred to as an "oil phase 3" in the present invention. Hereinafter, the description is made according to the above definitions.

The oil and fat composition according to the present invention is emulsified into a water-in-oil type and has an aqueous phase.

It is required that at least one selected from ascorbic acid (sometimes referred to as "VC") and salts thereof (sometimes referred to as "VC salts") is dissolved in the aqueous phase, and it is more preferable that ascorbic acid and sodium ascorbate are dissolved.

A water soluble solid content in the aqueous phase is required to be 22.80 to 85 mass%, more preferably 30 to 71 mass%, and even more preferably 35 to 71 mass%.

The total amount of the ascorbic acid and the ascorbic acid salt in the aqueous phase is preferably 7 to 85 mass% in the aqueous phase, more preferably 9 to 71 mass%, and even more preferably 11 to 71 mass%.

In addition, the pH of the aqueous phase is required to be adjusted to 3.6 or more, more preferably to pH 3.6 to 9.6, and even more preferably to pH 3.7 to 8.0. By setting the aqueous phase to a preferable state as described above, it is possible to obtain an oil and fat composition in which oxidation of the unsaturated fatty acid including DHA or EPA is suppressed.

In addition, it is also preferable that a pH adjuster is dissolved in the aqueous phase of the oil and fat composition according to the present invention.

Examples of the pH adjuster include sodium citrate, calcium carbonate, magnesium sulfate, sodium polyphosphate, sodium hydrogen carbonate, and sodium carbonate. Sodium citrate, calcium carbonate, magnesium sulfate, sodium hydrogen carbonate, and sodium carbonate are more preferable, and sodium citrate, calcium carbonate, and magnesium sulfate are even more preferable. In this case, it is obvious that the pH adjuster is required to be added in the above range of pH and the range of the above water soluble solid content.

The amount of the aqueous phase in the oil and fat composition of the present invention is preferably 0.3 to 22 mass%, more preferably 0.35 to 20 mass%, and even more preferably 0.37 to 16 mass%. By properly setting the amount of the aqueous phase, the oil and fat composition according to the present invention exhibits strong oxidation stability.

In the oil and fat composition according to the present invention, the oil phase (corresponding to the oil phase 3) is required to contain lecithins in addition to the oil and fat containing unsaturated fatty acid. Moreover, the oil and fat containing unsaturated fatty acid means that unsaturated fatty acid is included as one or more constituent fatty acid of the oil and fat, that is, triglyceride.

By including highly unsaturated fatty acid that is particularly easily oxidized and deteriorated as the unsaturated fatty acid, the effects according to the present invention are remarkably exhibited and thus preferable. That is, it is preferable to contain one or more selected from DHA and EPA as the unsaturated fatty acid.

In the present invention, lecithins refer to lecithin subjected to processing such as fractionation and an enzyme treatment, in addition to soybean lecithin, rapeseed lecithin, sunflower lecithin, and egg yolk lecithin. In particular, in the present invention, it is preferable to use lecithins in which a value obtained by dividing an amount of phosphatidylcholine in lecithins by the sum of an amount of phosphatidylcholine, an amount of phosphatidylethanolamine, and an amount of phosphatidylinositol is less than 0.48. This value is more preferably 0.10 to 0.45, even more preferably 0.2 to 0.42, and most preferably 0.28 to 0.37. By using preferable lecithins, it is possible to obtain an oil and fat composition having excellent oxidation stability. Typically, such a value is exhibited in a predetermined fractionated lecithin. As the origin of lecithin, soybean and sunflower are preferable.

The oil and fat composition according to the present invention can be prepared without using an emulsifier other than lecithins. That is, in the oil and fat composition according to the present invention, it is preferable that an emulsifier other than lecithins is not used. Accordingly, the oil and fat composition according to the present invention can be used in a wide range of applications including nursery formulated milk. In the present invention, an oil and fat composition that is prepared without using an emulsifier other than lecithins, particularly an emulsifier serving as a synthetic additive and has oxidation stability is referred to as a "oil and fat composition for nursery formulated milk". It is obvious that when the oil and fat composition is used for nursery formulated milk, a raw material that cannot be used for nursery formulated milk is not used in other components either.

An amount of the lecithins in the oil phase according to the present invention is preferably 0.03 to 6.5 mass%, more preferably 0.08 to 3.0 mass%, and even more preferably 0.1 to 1.5 mass%. By adding appropriate lecithins added in an appropriate amount, it is possible to obtain an oil and fat composition in which an emulsification state is stable.

In the oil and fat in the oil phase (corresponding to the oil phase 3), examples of the oil and fat containing unsaturated fatty acid include animal oil and fat in addition to soybean oil, rapeseed oil, rice oil, cottonseed oil, corn oil, super palm olein, linseed oil, sesame oil, arachidonic acid-containing oil and fat. In addition, hydrogenated oil and transesterified oil can also be used. Besides, examples of oil and fat containing DHA or EPA include fish oil, and yeast- or algae-derived oil and fat.

In addition, use of oil and fat other than the oil and fat containing unsaturated fatty acid is not prevented.

In the oil and fat composition according to the present invention, it is preferable to contain DHA and/or EPA. In this case, the total amount of DHA and EPA is preferably 0.25 mass% or more in the oil and fat composition. The total amount is more preferably 0.75 to 80 mass% and even more preferably 1.5 to 60 mass%. When the total amount of DHA and EPA is an appropriate amount, various products containing DHA and EPA can be prepared using the present product, and DHA and EPA can be enriched in nursery formulated milk.

In addition to the materials defined above, various materials can be added to the oil and fat composition according to the present invention without affecting the effect of the present invention.

For example, carbohydrate can be used as the solid content in the aqueous phase. Examples of carbohydrate include dextrin, oligosaccharide, and powdered sugar. Further, an oil-soluble antioxidant can be added to the oil phase, and flavor or a colorant can be added, if necessary. However, depending on the application, materials that can be added are naturally limited.

Next, the method of preparing the oil and fat composition according to the present invention is described taking an efficient preparation method as a main example.

First, an aqueous phase and an oil phase (corresponding to the oil phase 1) are prepared.

The aqueous phase is prepared by dissolving one or more selected from ascorbic acid and salts thereof in water and adjusting pH to 3.6 or more. The pH may be adjusted by using ascorbic acid and salts of ascorbic acid in combination, or be adjusted by separately using sodium citrate, calcium carbonate, magnesium sulfate, or other pH adjusters. The most preferable aspect is a combination of ascorbic acid and sodium ascorbate.

The amount of the solid content in the aqueous phase is required to be 22.80 to 85 mass%, and this amount is in principle derived from ascorbic acid and/or salts thereof, and a pH adjuster. The use of materials other than these materials is not prevented, but in order to use the oil and fat composition according to the present invention in a wide range of applications including nursery formulated milk, it is preferable that no water soluble solid content other than these materials is used.

The oil phase (corresponding to the oil phase 1) according to the present invention is prepared by dissolving lecithins in oil and fat. The kinds of the lecithins used are as described above. An amount of lecithins to be dissolved is converted from the desired amount of lecithin in the oil phase to add the lecithins.

As the oil and fat composition according to the present invention, various kinds of oil and fat can be used. Here, the oil and fat composition according to the present invention contains unsaturated fatty acid including DHA and/or EPA, and thus it is obvious that oil and fat including these components can be used.

When the oil and fat composition according to the present invention is effectively prepared, it is preferable that, an aqueous phase is temporarily dispersed in an oil phase (corresponding to the oil phase 1) including lecithins to be a water-in-oil type, and then the water-in-oil type emulsion is mixed with the oil and fat (corresponding to the oil phase 2) containing unsaturated fatty acid. Therefore, it is not necessary that the oil phase 1 includes all of the oil and fat containing unsaturated fatty acid that is required to be present in the oil and fat composition according to the present invention. Rather, it is advantageous to use general oil and fat such as soybean oil.

When the aqueous phase is dispersed in the oil phase 1, it is required to use a relatively strong emulsifier, but the water-in-oil type emulsion temporarily prepared is easily dispersed in oil and fat containing unsaturated fatty acid. In particular, when oil and fat containing highly unsaturated fatty acid is subjected to a powerful emulsifier, the oil and fat may be deteriorated by heat generated by a treatment, and thus it is preferable that oil and fat containing highly unsaturated fatty acid is not used in the oil phase 1, and general oil and fat such as soybean oil is used.

As a device for dispersing the aqueous phase in the oil phase 1, various emulsifiers can be used. Specific examples include a high-pressure homogenizer, an ultrasonic emulsifier, and a two-liquid collision type emulsifier which is also referred to as a wet-type jet mill. When a suitable emulsifying device is used, a predetermined oil and fat composition can be obtained. Moreover, general emulsification conditions when a high-pressure homogenizer is used are 30 to 40 MPa and 10 to 30 passes. Thereby, it is possible to obtain an emulsion having an average particle diameter of about 300 nm.

The oil and fat composition according to the present invention is completed by mixing the obtained water-in-oil type emulsion and the oil and fat (corresponding to the oil phase 2) containing unsaturated fatty acid with each other. When the water-in-oil emulsion is mixed with oil and fat, the mixture can be easily homogenized.

In the present invention, a part of the moisture of the oil and fat composition can be dehydrated. The dehydrating method can be carried out by bubbling gas or reducing the pressure, but the method is not limited. When appropriate partial dehydration is carried out, an oil and fat composition exhibiting strong antioxidant power can be obtained. In addition, when appropriate partial dehydration is carried out, a period of time until precipitation occurs can be lengthened, and the value of the product can be improved.

It is obvious that an amount of the solid content in the aqueous phase increases by carrying out partial dehydration compared with that in a case of the initial formulation.

Moreover, in the oil and fat composition according to the present invention, precipitation with time is less likely to occur. The less likeliness of precipitation is preferable because there is little fluctuation in quality with time, and a homogeneous product can be easily obtained when nursery formulated milk or the like is prepared. Therefore, in the oil and fat composition according to the present invention, it is determined that a product in which precipitation does not occur for a predetermined period of time is acceptable. Specific evaluation methods are described in the examples. Examples are described below.

### Examples

### Research 1 Preparation of oil and fat composition

Based on the formulation of Table 1, an oil and fat composition was prepared. The preparation method is performed according to "○ Method of preparing oil and fat composition".

10 mL of each of the obtained oil and fat compositions was introduced into a 15 mL conical tube and kept still at 20°C for 24 hours to observe the occurrence of precipitation. A state in which precipitation was not homogenized even in a case of being turned upside down is evaluated as "strong precipitation" and is presented as "×" in Table 2. A product in which precipitation occurred, but the precipitation was homogenized in a case of being turned upside down is presented as "○" in Table 2. A product other than these cases is presented as "Δ" in Table 2. "Δ" and "○" are determined as acceptable.

With each oil and fat composition immediately after the preparation, oxidation stability was measured by a conductmetric determination method (CDM) test. This is also presented in Table 2. Moreover, the measurement of the oxidation stability by the CDM test was performed according to "o Method of measuring oxidation stability by CDM test".

A product in which precipitation occurred was determined as unacceptable, and a CDM value is not presented.

In each test section in Table 1, with respect to Examples 1 to 20, 29 to 33, and 35 to 52, the CDM test was performed by using a mixture of 20 of soybean oil with 80 of "DHA and EPA-containing oil and fat" as control oil and fat. With respect to Example 34, the CDM test was performed by using a mixture of 10 of soybean oil with 90 of "DHA and EPA-containing oil and fat" as control oil and fat. With respect to Example 53, the CDM test was performed by using a mixture of 99 of soybean oil with 1 of "DHA and EPA-containing oil and fat" as control oil and fat. With respect to Examples 21 to 28, the CDM test was performed by using respective "DHA and EPA-containing oil and fat" as control oil and fat. Results thereof are presented in Table 2. A product having a higher CDM value than the value of the control was determined as acceptable.

Moreover, the heating temperature in a case of the CDM test of the control oil and fat was determined according to each of the examples and comparative examples.

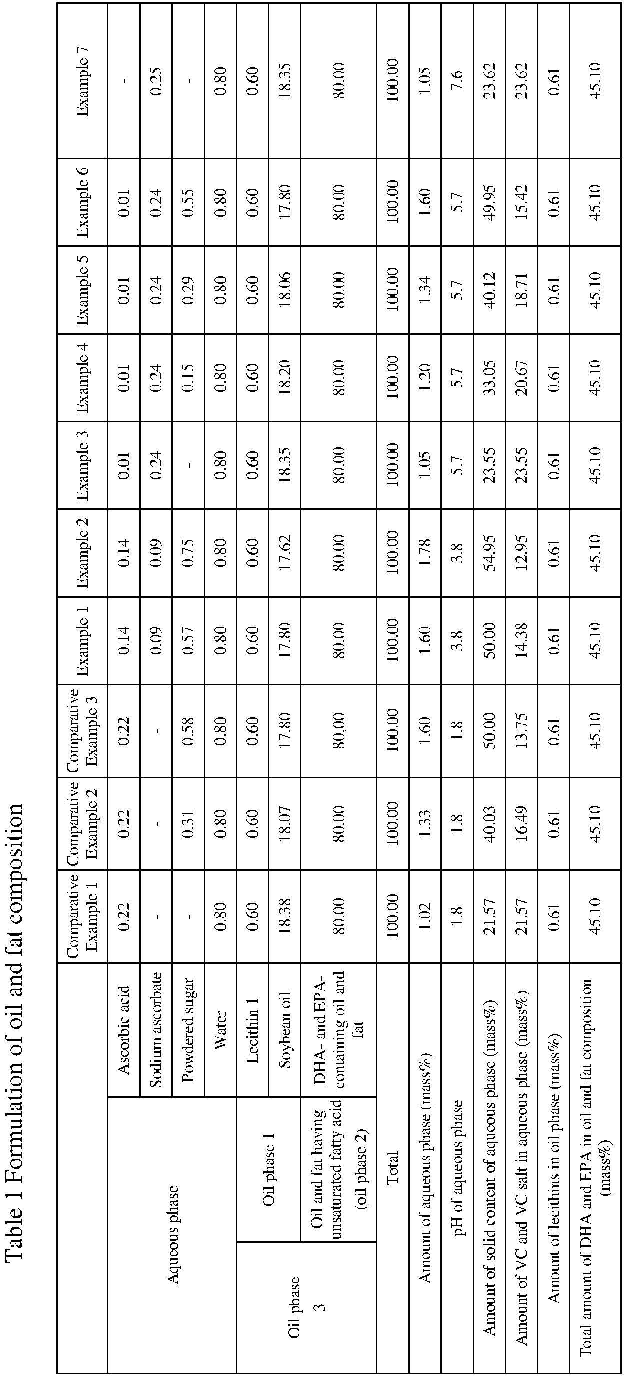

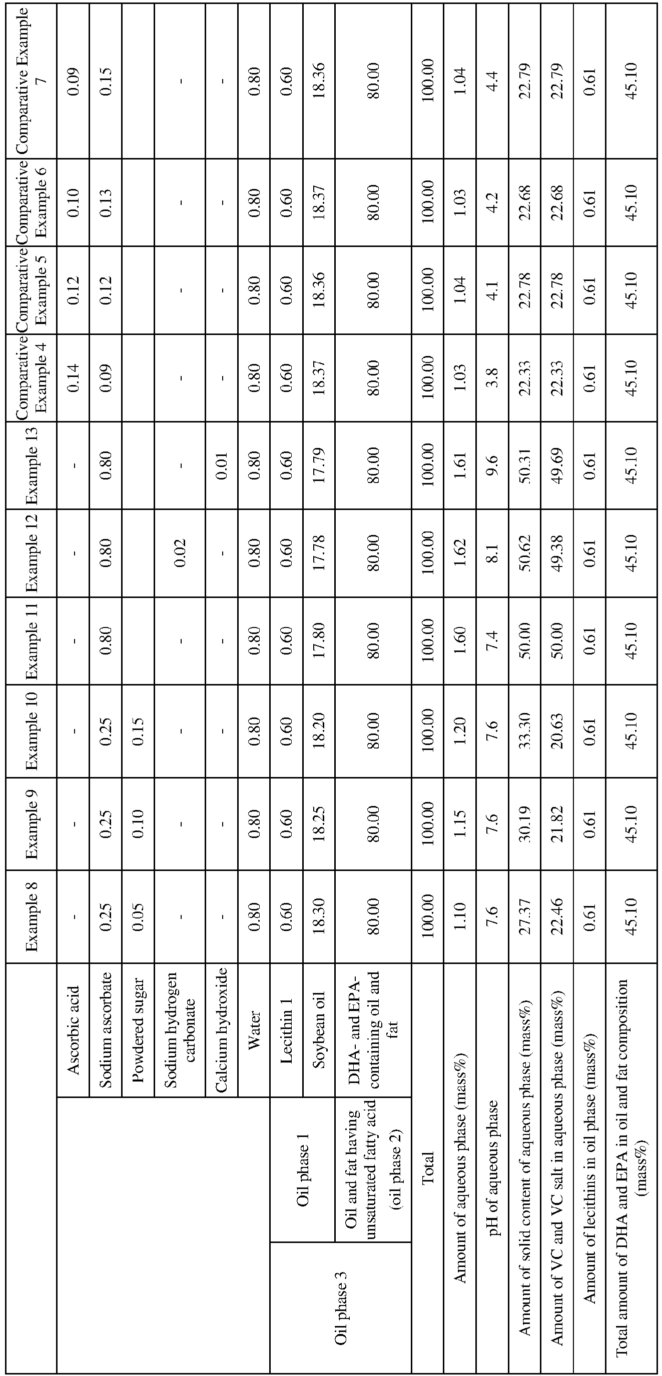

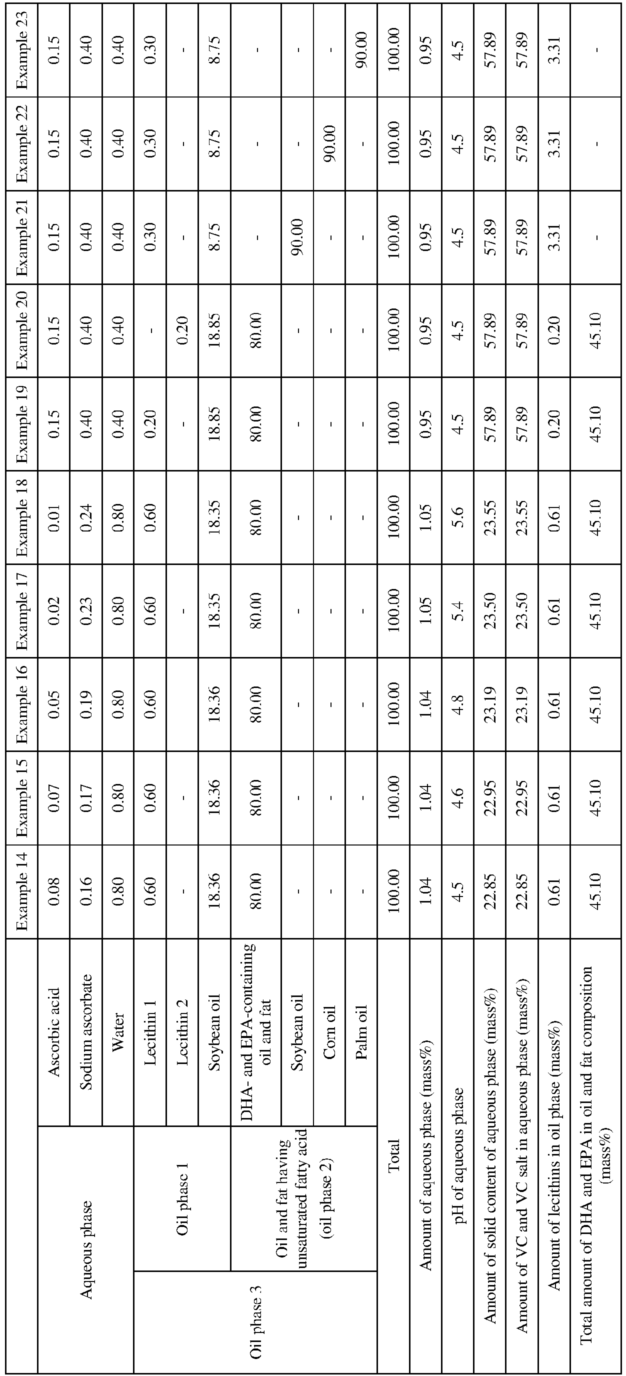

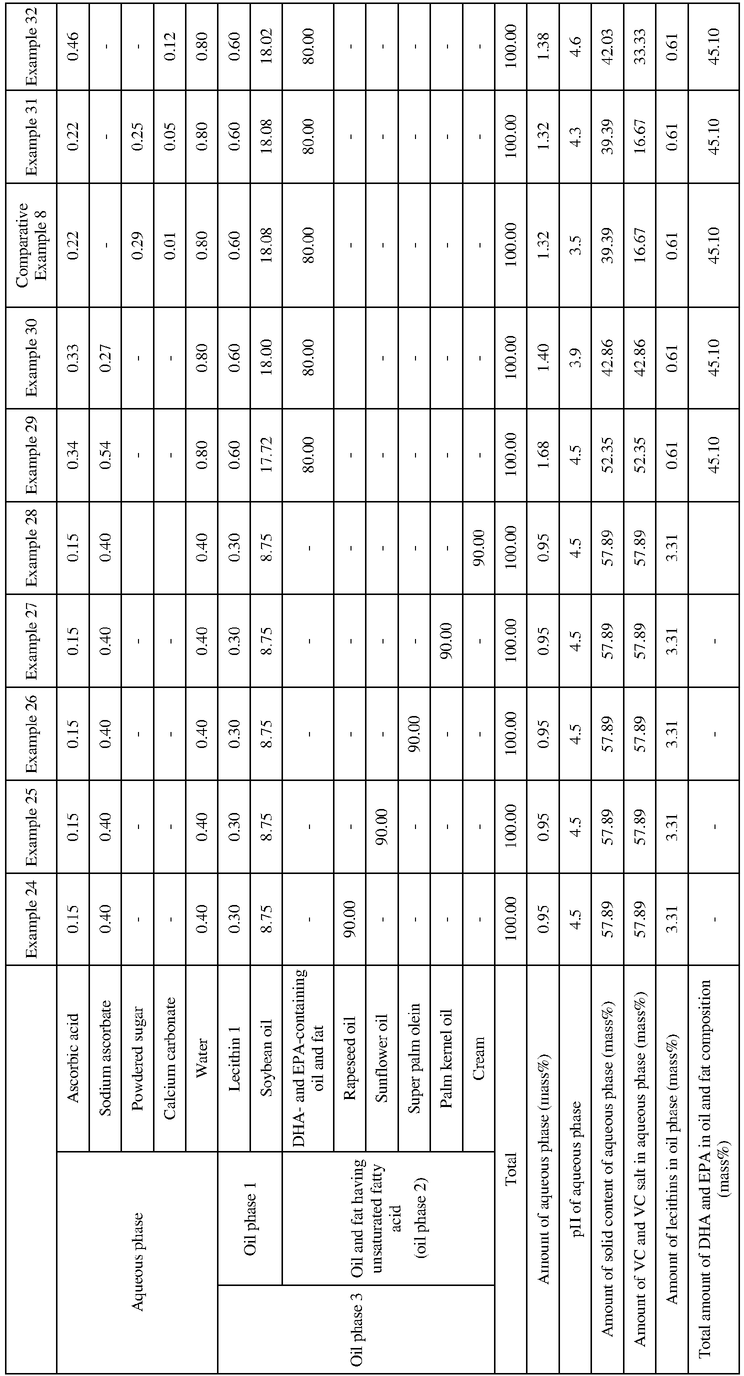

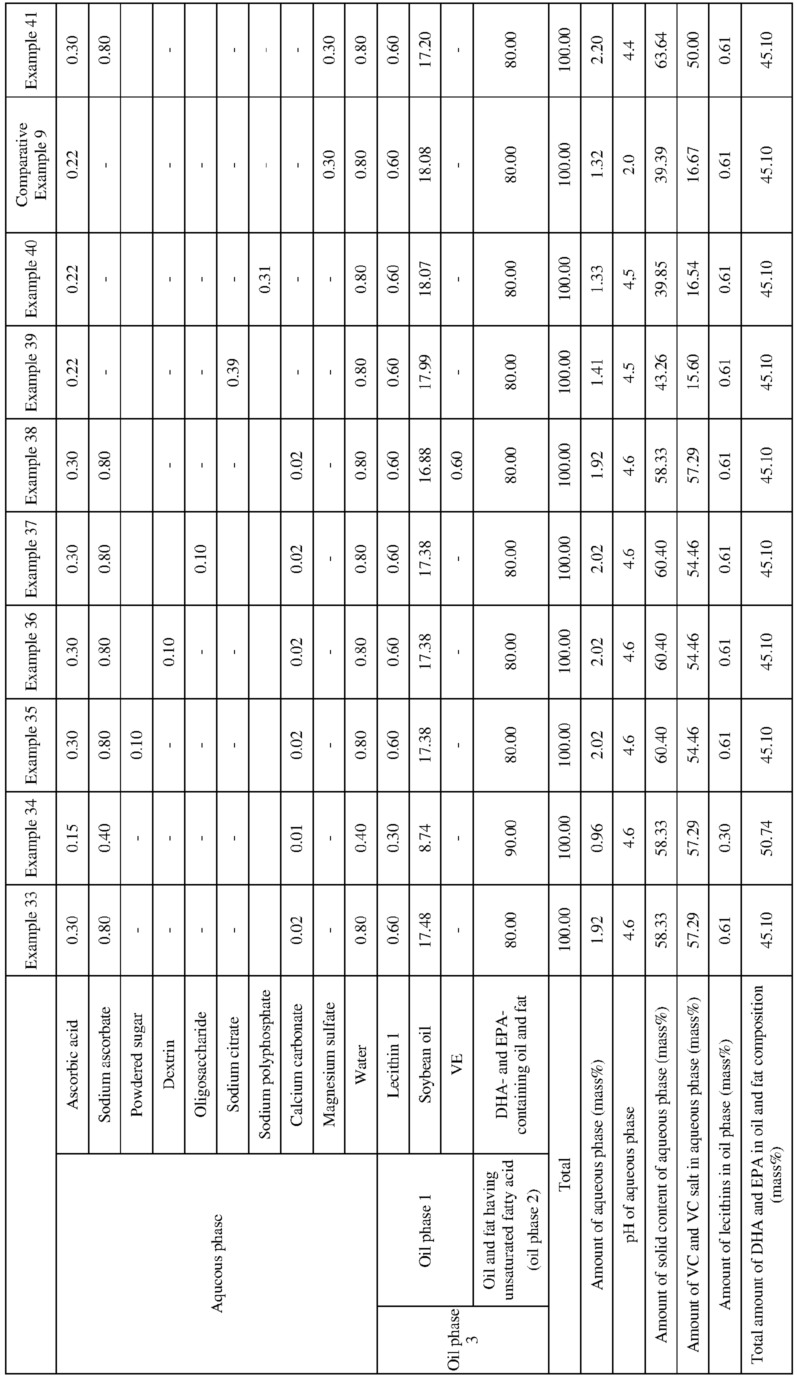

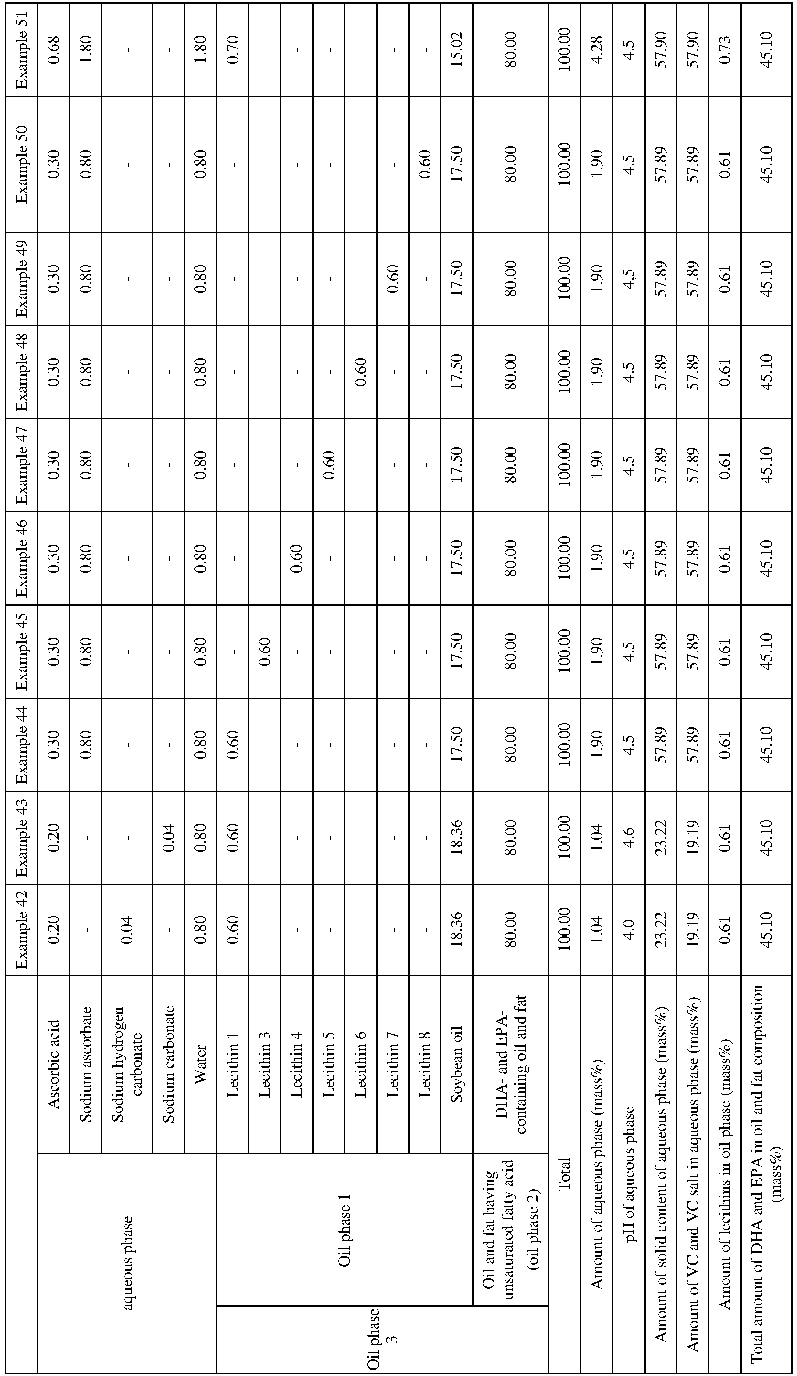

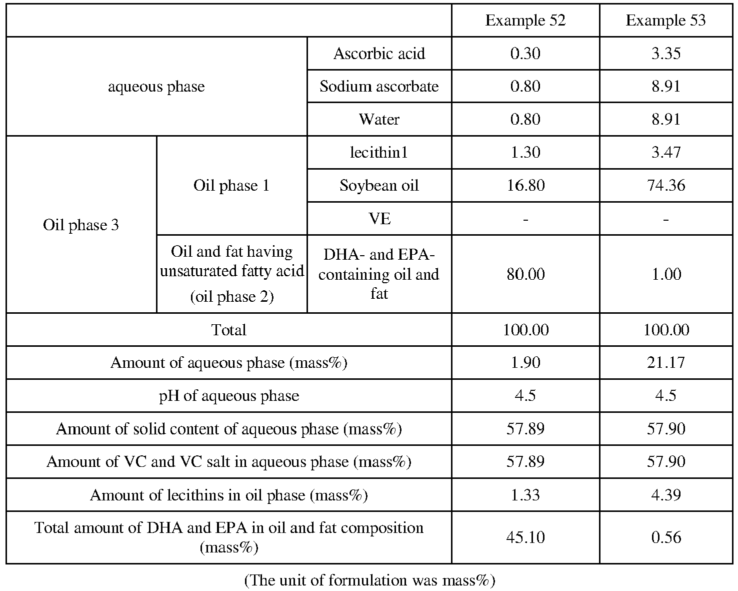

- Powdered sucrose was used for powdered sugar.
- "TK16" by Matsutani Chemical Industry Co., Ltd. was used for dextrin.
- "MEIOLIGO" manufactured by Meiji Food Materia Co., Ltd. was used for oligosaccharide.
- "SLP-PASTE F" manufactured by Tsuji Oil Mills Co., Ltd. was used for Lecithin 1. A value obtained by dividing the amount of phosphatidylcholine by the sum of the amount of phosphatidylcholine, the amount of phosphatidylethanolamine, and the amount of phosphatidylinositol was 0.30. The origin was soybean.
- "SLP-PASTE" manufactured by Tsuji Oil Mills Co., Ltd. was used for Lecithin 2. A value obtained by dividing the amount of phosphatidylcholine by the sum of the amount of phosphatidylcholine, the amount of phosphatidylethanolamine, and the amount of phosphatidylinositol was 0.42. The origin was soybean.
- "Beakin LV3" manufactured by Archer Daniels Midland Company was used for Lecithin 3. A value obtained by dividing the amount of phosphatidylcholine by the sum of the amount of phosphatidylcholine, the amount of phosphatidylethanolamine, and the amount of phosphatidylinositol was 0.41. The origin was soybean.
- "Topcithin UB" manufactured by Cargill Incorporated was used for Lecithin 4. A value obtained by dividing the amount of phosphatidylcholine by the sum of the amount of phosphatidylcholine, the amount of phosphatidylethanolamine, and the amount of phosphatidylinositol was 0.42. The origin was soybean.
- "Ultralec P" manufactured by Archer Daniels Midland Company was used for Lecithin 5. A value obtained by dividing the amount of phosphatidylcholine by the sum of the amount of phosphatidylcholine, the amount of phosphatidylethanolamine, and the amount of phosphatidylinositol was 0.43. The origin was soybean.
- "Alcolec SGU" manufactured by American Lecithin Company was used for Lecithin 6. A value obtained by dividing the amount of phosphatidylcholine by the sum of the amount of phosphatidylcholine, the amount of phosphatidylethanolamine, and the amount of phosphatidylinositol was 0.36. The origin was soybean.
- "Lecigran 1000P" manufactured by Cargill Incorporated was used for Lecithin 7. A value obtained by dividing the amount of phosphatidylcholine by the sum of the amount of phosphatidylcholine, the amount of phosphatidylethanolamine, and the amount of phosphatidylinositol was 0.48. The origin was soybean.
- "SUN LECITHIN" manufactured by Archer Daniels Midland Company was used for Lecithin 8. A value obtained by dividing the amount of phosphatidylcholine in lecithins by the sum of the amount of phosphatidylcholine, the amount of phosphatidylethanolamine, and the amount of phosphatidylinositol was 0.42. The origin was sunflower.
- "RIKEN OIL 800" manufactured by Riken Vitamin Co., Ltd. was used for vitamin E (VE).
- Oil and fat containing 56 mass% of DHA and EPA in total was used for DHA and EPA-containing oil and fat.

### ∘ Method of preparing oil and fat composition

1: Raw materials classified into the aqueous phase were mixed with each other according to the formulation presented in Table 1 and the aqueous phase was prepared.
2: Raw materials classified into the oil phase 1 were mixed with each other according to the formulation presented in Table 1 and the oil phase 1 was prepared.
3: The aqueous phase was mixed with the oil phase 1, and emulsified into a water-in-oil type emulsion by using a high-pressure homogenizer (37 MPa, 20 passes).
4: The water-in-oil type emulsion obtained in 3 was mixed with each "oil phase 2" to obtain an oil and fat composition.

Note 1: As pH values presented in Table 1, values measured when the aqueous phase was prepared are presented.

### ∘ Method of measuring oxidation stability by CDM test

The CDM test was performed using "RANCIMAT" which is a dedicated test device.

Specifically, each sample was heated to 96°C in Examples 1 to 20 and 29 to 52 and Comparative Examples 1 to 9 and to 120°C in Examples 21 to 28 and 53, bubbling was performed at 20 L/h to promote oxidization, volatile components were collected with water, and an energized state thereof was observed to perform evaluation. A sample that required a long period of time to reach a predetermined energized state was determined to have excellent oxidation stability.

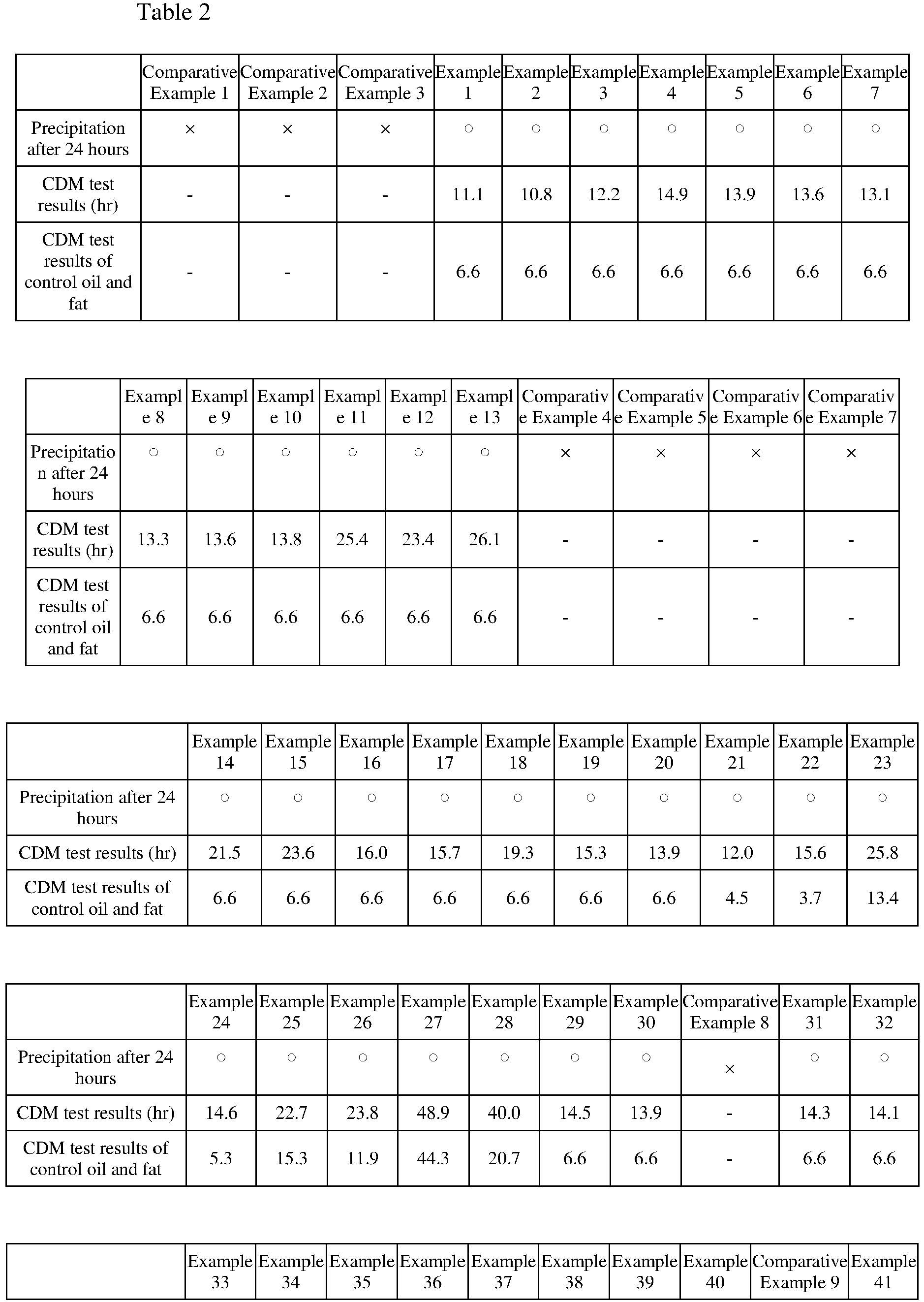

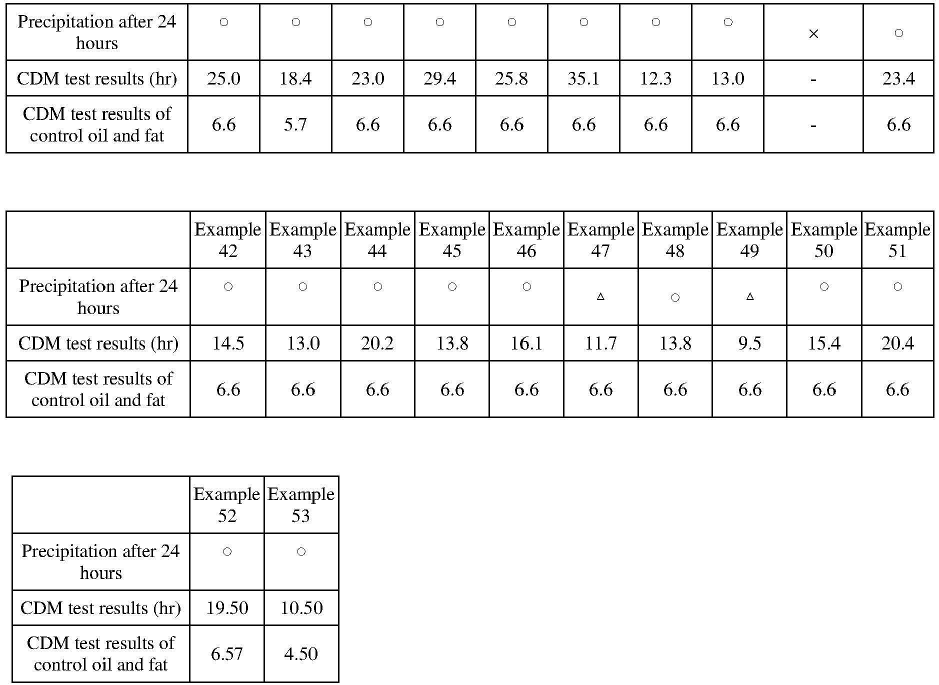

### Results and consideration

- It was confirmed that, when the amount of the solid content in the aqueous phase was a predetermined value and pH was a predetermined value or more, precipitation is not likely to occur, and a satisfactory CDM value was presented.
- With respect to the lecithins, though not presented in the results, when lecithins in which the value obtained by dividing the amount of phosphatidylcholine in lecithins by the sum of the amount of phosphatidylcholine, the amount of phosphatidylethanolamine, and the amount of phosphatidylinositol was a preferable value, particularly 0.28 to 0.37, were used, emulsification tended to be stable and was thus preferable.

### Research 2 Preparation of nursery formulated milk

The oil and fat composition according to the present invention was mixed with commercially available nursery formulated powdered milk and nursery formulated milk is simply prepared.

The formulation was presented in Table 3.

The nursery formulated powdered milk in which the oil and fat composition according to the present invention was mixed was evaluated by "o Method of evaluating change of nursery formulated powdered milk with time". Results are presented in Table 4.

**Table 3 Formulation**

| | Comparative Example 2-1 | Comparative Example 2-2 | Example 2-1 | Example 2-2 |
|---|---|---|---|---|
| Nursery formulated powdered milk | 95.7% | 78.4% | 96.0% | 79.8% |
| Commercially available fish oil | 4.3% | 21.6% | - | - |
| Oil and fat of Example 33 | - | - | 4.0% | 20.2% |
| Content of DHA (mg/100 g) | 1000 | 5000 | 1000 | 5000 |

| | | | | |
|---|---|---|---|---|
| (The unit of formulation was mass%) | | | | |

- Oil and fat containing 25 mass% of DHA was used for commercially available fish oil.
- "BALANCE MILK" manufactured by Icreo Co., Ltd. was used for nursery formulated powdered milk.
- 23 mass% of DHA is contained in the oil and fat composition of Example 33.

### ∘ Method of evaluating change of nursery formulated powdered milk with time

1: 50 g of each nursery formulated powdered milk was introduced into a 300 ml Erlenmeyer flask.
2: The nursery formulated powdered milk was preserved in an incubator at 60°C for 24 hours.
3: The odor felt at the time of opening was evaluated by three panelists and evaluated by discussion according to the following criteria. For comparison (control), nursery formulated powdered milk ("BALANCE MILK" manufactured by Icreo Co., Ltd.) preserved in a cool dark place was used.
   ○: The odor was evaluated as equivalent to the control.
   ×: The odor different from the control was clearly felt and thus was evaluated as unacceptable.
   ○ was considered as acceptable.

**Table 4 Results**

| | Comparative Example 2-1 | Comparative Example 2-2 | Example 2-1 | Example 2-2 |
|---|---|---|---|---|
| Evaluation results of taste | × | × | ○ | ○ |

### Consideration

As presented in Table 4, it was confirmed that, when the oil and fat composition according to the present invention is used, the nursery formulated milk to which DHA and EPA are added exhibits satisfactory preservation stability. Accordingly, it is confirmed that the oil and fat composition according to the present invention is an oil and fat composition for nursery formulated milk.

## Claims

1. An oil and fat composition satisfying following conditions:
1: 0.3 to 22 mass% of an aqueous phase, in which one or more selected from ascorbic acid and salts thereof are dissolved and pH is adjusted to 3.6 or more, is dispersed in an oil phase;
2: an amount of a solid content in the aqueous phase is 22.80 to 85 mass%; and
3: the oil phase contains an oil and fat comprising unsaturated fatty acid and lecithins.

2. The oil and fat composition according to claim 1,
wherein the aqueous phase comprises the one or more selected from ascorbic acid and salts thereof as essential components and additionally comprises a pH adjuster dissolved therein.

3. The oil and fat composition according to claim 1,
wherein in the lecithins, a value obtained by dividing an amount of phosphatidylcholine in the lecithins by a sum of the amount of phosphatidylcholine, an amount of phosphatidylethanolamine, and an amount of phosphatidylinositol is less than 0.48.

4. The oil and fat composition according to claim 2,
wherein in the lecithins, a value obtained by dividing an amount of phosphatidylcholine in the lecithins by a sum of the amount of phosphatidylcholine, an amount of phosphatidylethanolamine, and an amount of phosphatidylinositol is less than 0.48.

5. The oil and fat composition according to claim 1,
wherein a sum of DHA and EPA is 0.25 mass% or more.

6. The oil and fat composition according to claim 2,
wherein a sum of DHA and EPA is 0.25 mass% or more.

7. The oil and fat composition according to claim 3,
wherein a sum of DHA and EPA is 0.25 mass% or more.

8. The oil and fat composition according to claim 4,
wherein a sum of DHA and EPA is 0.25 mass% or more.

9. A method of manufacturing an oil and fat composition comprising following steps:
1: a step of adjusting pH to 3.6 or more and dissolving one or more selected from ascorbic acid and salts thereof to prepare an aqueous phase;
2: a step of dissolving lecithins in an oil and fat to prepare an oil phase;
3: a step of finely dispersing the aqueous phase obtained in 1 in the oil phase obtained in 2 to obtain a water-in-oil type emulsion; and
4: a step of mixing the water-in-oil type emulsion obtained in 3 with an oil and fat containing unsaturated fatty acid to form an oil and fat composition containing 0.3 to 22 mass% of the aqueous phase.

10. The manufacturing method according to claim 9,
wherein the aqueous phase comprises the one or more selected from ascorbic acid and salts thereof as essential components and additionally dissolves a pH adjuster.

11. The manufacturing method according to claim 9,
wherein in the lecithins, a value obtained by dividing an amount of phosphatidylcholine in the lecithins by a sum of the amount of phosphatidylcholine, an amount of phosphatidylethanolamine, and an amount of phosphatidylinositol is less than 0.48.

12. The manufacturing method according to claim 10,
wherein in the lecithins, a value obtained by dividing an amount of phosphatidylcholine in the lecithins by a sum of the amount of phosphatidylcholine, an amount of phosphatidylethanolamine, and an amount of phosphatidylinositol is less than 0.48.

13. The manufacturing method according to any one of claims 9 to 12,
wherein a sum of DHA and EPA is 0.25 mass% or more.

14. The oil and fat composition according to any one of claims 1 to 8, which is used for a nursery formulated milk.

15. A nursery formulated milk comprising the oil and fat composition according to any one of claims 1 to 8.
